(19) Europäisches Patentamt
European Patent Office
Office européen des brevets

(11) EP 0 428 726 B1

(12) **EUROPEAN PATENT SPECIFICATION**

(45) Date of publication and mention
of the grant of the patent:
**30.10.1996 Bulletin 1996/44**

(21) Application number: **89908869.4**

(22) Date of filing: **01.08.1989**

(51) Int Cl.$^6$: **H01M 12/06**, H01M 4/96

(86) International application number:
**PCT/JP89/00789**

(87) International publication number:
**WO 90/01812 (22.02.1990 Gazette 1990/05)**

(54) **AIR CELL**

LUFT-DEPOLARISIERUNGSBATTERIE

PILE A DEPOLARISATION PAR L'AIR

(84) Designated Contracting States:
**AT DE FR GB IT NL**

(30) Priority: **12.08.1988 JP 201210/88**
**12.08.1988 JP 201211/88**

(43) Date of publication of application:
**29.05.1991 Bulletin 1991/22**

(73) Proprietor: **KOA OIL COMPANY, LIMITED**
**Chiyoda-Ku Tokyo-To (JP)**

(72) Inventors:
• **OKAMURA, Okiyoshi**
**Koa Oil Co., Ltd. Marifu Seiyujo**
**Kuga-gun Yamaguchi 740 (JP)**
• **WAKASA, Masayuki**
**Koa Oil Co., Ltd. Marifu Seiyujo**
**Kuga-gun Yamaguchi 740 (JP)**

• **TAMANOI, Yoshihito**
**Koa Oil Co. Ltd. Marifu Seiyujo**
**Kuga-gun Yamaguchi 740 (JP)**

(74) Representative: **Boon, Graham Anthony et al**
**Elkington and Fife,**
**Prospect House,**
**8 Pembroke Road**
**Sevenoaks, Kent TN13 1XR (GB)**

(56) References cited:
EP-A- 0 298 690          DE-A- 2 009 063
GB-A- 1 489 576          JP-A-49 128 234
JP-A-58 225 582          JP-A-61 126 777
JP-B- 3 930 068          JP-B- 4 829 256
JP-U-58 127 566          JP-Y- 0 542 330
JP-Y- 5 427 548          US-A- 2 620 371

## Description

The present invention relates to an air cell.

In order to drive a motor mounted on a model airplane, one or more cells to be mounted must be compact in size and light in weight so that generally nickel-cadmium cells are used.

For instance, when seven U No. 3 cells (about 170 g) are mounted on a model helicopter, the flight time is of the order of two minutes.

In order to reduce to practical application of such model airplanes to uses such as cropdusting, surveying and photographing, there is a demand for lengthening the flight time. In this case, since the conventional cells have a small output per unit weight and many cells cannot be mounted on a model airplane, the flight time is short.

The conventional cells have a further problem that not only for model helicopters mentioned above but also for driving power supplies which must supply high power, the demands for higher power per unit weight and a longer service life cannot be satisfied.

An object of the present invention is to provide an air cell which is compact in size and light in weight yet is capable of supplying a high output.

Accordingly, the invention provides an air cell comprising:

a cathode;
an anode; and
means for collecting electrons generated at said anode, said means comprising a current collector electroconductively connected to said cathode and contacting said cathode at a surface thereof facing towards said anode;

characterised in that

the anode has a comb-like shape so that a plurality of openings are defined therethrough; and
the cathode has a plurality of spaced-apart sections or at least one through-hole extending therethrough.

As described above, the current collector is so disposed between the cathode and the anode that it contacts the cathode, so that the air cell can be made compact in size and light in weight, has a low degree of internal resistance, and accordingly is advantageous to the generation of a high current.

The cathode may either be constructed by assembling a plurality of cathode sections or has at least one through hole so that the air cell is compact in size and light in weight yet is capable of producing a high output.

Fig. 1A is a longitudinal sectional view of a first embodiment of the present invention;
Fig. 1B is an exploded view illustrating the component parts thereof;
Fig. 2 is a graph indicating the relationship between cathode area and output density;
Fig. 3 illustrates the steps for the fabrication of a cathode 20 in the first embodiment;
Fig. 4 is a graph indicating the relationship between the quantity of active carbon contained in a petroleum-series graphite powder and the output density;
Fig. 5 is a graph showing discharge curves; and
Fig. 6 is a sectional elevation for a description of a second embodiment of the invention.

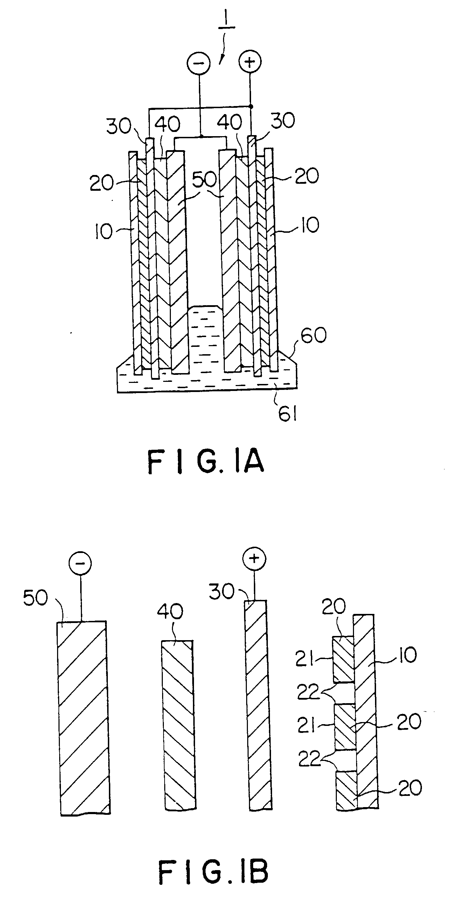

Fig. 1A is a schematic longitudinal sectional view illustrating the first embodiment of the invention.

Fig. 1B is an exploded view of the right half of the air cell 1 shown in Fig. 1A, illustrating its component parts separated from each other.

The air cell, 1 of the first embodiment of the present invention has a glass paper 10, the cathode 20, a current collector 30, a separator 40, an anode 50 and a liquid storage 60 storing therein KCl liquid 61.

The glass paper 10 is a mounting plate for the cathode 20 and is water repellent.

The cathode 20 is a film mainly consisting of petroleum graphite powder.

As shown in FIG. 1B, the cathode 20 is caused to be in intimate contact with the surface on the side of the anode 50 of the glass paper 10 and is divided into a plurality of sections.

The current collector 30 is in the form of a wire net or a mesh which is fabricated with a metal such as nickel, copper or the like and has a mesh range of from 200 to 300 mesh, so that the air and liquid may pass through the current collector 30. It is disposed between the anode 50 and the cathode 20 and is in intimate contact with the cathode 20.

The separator 40 is made of a water absorbing material such as glass paper which has not been subjected to a water repellent treatment. It electrically isolates the current collector 30 from the anode 50 and absorbs KCl or NaCl liquid (electrolyte) 61 to be caused by a capillary phenomenon, so that the anode 50 and the cathode 20 are wetted. Instead of glass paper, a sheet of paper can be used for the separator 40.

The anode 50 is made of a magnesium alloy, a zinc alloy, an aluminum alloy or the like. Only one alloy may be used to fabricate the anode 50, or the anode 50 may also be made of a plurality of alloys.

The following chemical reaction takes place at the cathode 20:

$$\tfrac{1}{2}O_2 + H_2O + 2e^- \rightarrow 2OH^-$$

or

$$O_2 + H_2O + 2e^- \rightarrow O_2H^- + OH^-$$

$$O_2H^- \rightarrow OH^- + \tfrac{1}{2}O_2$$

On the other hand, when the anode 50 is made of a Mg alloy, the following chemical reactions occur:

$$Mg + 2OH^- \rightarrow MgO + H_2O + 2e^-$$

$$Mg + 2H_2O \rightarrow Mg(OH)_2 + H_2 \uparrow \text{ (side reaction)}$$

The above-described chemical reactions are similar to those of the conventional cells. When a load is connected to the air cell 1, the electron $e^-$ produced in the anode 50 flows through the load and reaches the cathode 20 at which the electron $e^-$ vanishes as described above. In this way, the current flows from the cathode 20 to the anode 50.

In the first embodiment, it is assumed that the cathode 20 is divided into a plurality of cathode sections so that the cathode 20 has flat surface portions 21 and edges 22 which are in contact with the current collector 30. The cathode 20 and the adjacent projections 22 are spaced apart from each other.

Meanwhile, when the quantity of transmitted gas is represented by Q; the coefficient of gas transmission, by p; the gas pressure difference, by $\Delta P$; the cross sectional area of the cathode 20, by A'; the film pressure of the cathode 20, by $\ell$; and the temperature, by t; the following equation (I) is established:

$$Q = P \cdot (\Delta P / \ell) \cdot t \cdot A' \tag{I}$$

When the gas diffusion coefficient is represented by D; and the solubility by S, the following equation is established:

$$P = D \cdot S \tag{II}$$

In the first embodiment, the diffusion coefficiency at the edges 22 is greater than that at the flat surface portions 21 of the cathode 20, so that it is seen from the Eq. (II) that the gas transmission coefficient P becomes high at the edges 22 at which the gas diffusion coefficient D is high. Therefore, from Eq. (I), it is seen that the gas transmission quantity at the edges 22 is greater than that at the flat surface portion. The fact that the gas transmission quantity at each projection 22 is large means that the quantity of the oxygen transmission at each edge 22 is large.

In view of the above, when, instead of fabricating the cathode 20 from a single sheet, the cathode 20 consists of a plurality divided sections, the quantity of the transmitted oxygen becomes large. As a result, the reaction at the cathode which contributes to the power generation is accelerated, so that the generated power is increased.

Alternatively, when, instead of fabricating the cathode 20 with a plurality of sectioned cathodes, the cathode 20 is made of a single flat sheet and is formed with at least one aperture or through hole, the generated power per unit weight is increased as described above.

In the first embodiment, the current collector 30 is placed in intimate contact with the cathode 20 on the side of the anode 50, so that the electrons generated in the anode 50 need not pass through the cathode 20. As a result, the internal voltage drop in the air cell 1 is less. In the case of a conventional air cell, anodes are disposed at the center portion of an air cell; cathodes are disposed outwardly of the anodes; and a wire net made of a metal such as nickel is disposed outwardly of the cathodes and used as a current collector. In this case, the above-described reactions occur at the cathode side of the anode, or the inner surface of the anode, so that when the electrons flow from the current collectors to the cathodes and further flow through the cathodes, they encounter the electric resistance of the order of 0.1 $\Omega$. When a high current of the order of 10 A flows, the voltage drop becomes 1 V.

However, according to the present invention, the current collector 30 is placed in intimate contact with the surface on the side of the anode 50 side of the cathode 20, so that the current collector 30 is disposed at the portion at which the above-mentioned reactions occur, and consequently the electrons generated at the anode 50 can flow directly to the reaction portion without passing through the cathode 20. Therefore, the internal voltage drop resulting from the passage of electrons through the cathode is decreased. The above-described construction is especially advantageous in the case of flow of a high current.

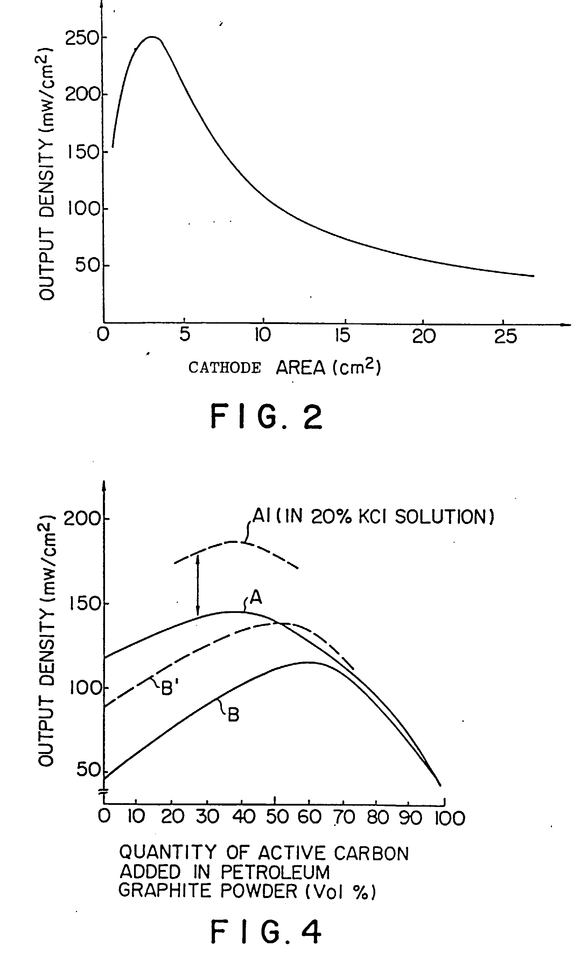

FIG. 2 illustrates the variation of the output density with variation of the area of the cathode 20.

The measurement conditions are that the electrolyte is 20% KCl; the film pressure is 180 micrometers; and the temperature is 24°C. It is apparent from FIG. 2 that the output power per unit area when the cathode 20 has a small surface is greater than the output power per unit area when the cathode 20 has a large surface. In the case of FIG. 2, when one cathode 20 has an area of the order of 3 cm², the maximum power output per unit area can be obtained.

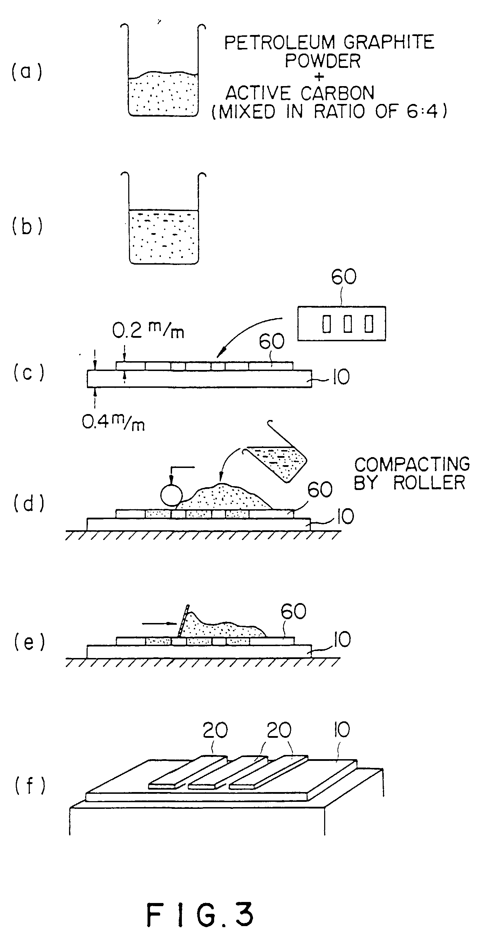

FIG. 3 is a view for a description of the fabrication of a plurality of sections which are assembled together as the cathode 20 as shown in FIG. 1B.

First, the above mentioned petroleum graphite powder and active carbon are mixed in a ratio of about 6:4, and then a polytetrafluoroethylene dispersion liquid is added and mixed. This mixture is a basic material of the cathode 20. It should be noted here that active carbon is used as a catalyst.

Next, the glass paper 10 which is used as the mounting plate on which is mounted the cathode 20 is subjected to a water-repellent treatment. Then a mold 60 is mounted on the glass paper 10. Thereafter the basic material of the cathode 20 is cast into the mold 60, and the upper surface of the cast basic material is compressed by a roller.

Next, the basic material of the cathode 20 which is squeezed out of the mold 60 is removed by a scraper, and then the mold 60 is removed. Thereafter the cast basic material of the cathode 20 is heated at a temperature of the order of about 380°C. A plurality of sections of the cathode 20 thus baked are joined to the glass paper 10 as shown in Fig. 1B.

When the mold 60 has a plurality of square openings, the cathode 20 is divided into the form of stripes, so that a high-output air cell can be obtained. Moreover, the mold 60 may be formed with a plurality of openings of a shape other than square such as triangular, pentagonal or round openings.

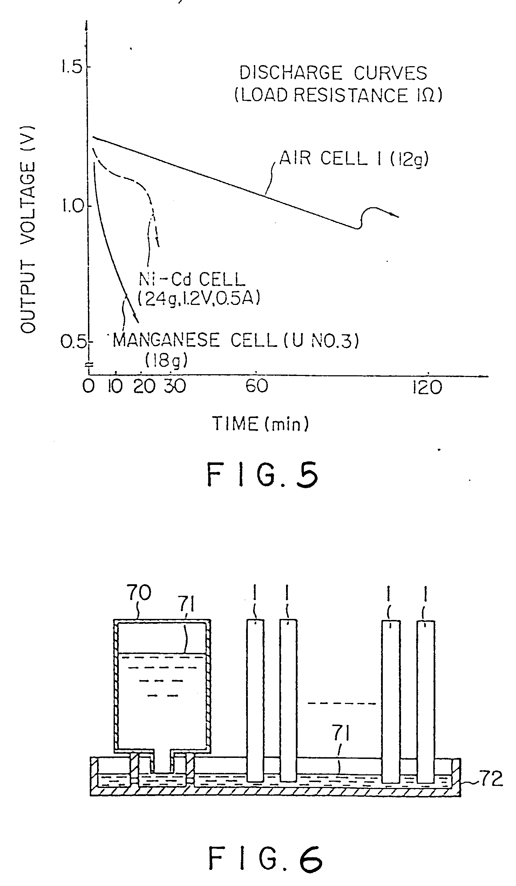

Fig. 4 indicates the variation of the output density (output power per unit area) with variation in the quantity of the active carbon in the petroleum graphite.

The results shown in Figure 4 were produced with the following test conditions and parameters: temperature of 34°C; size of cathode 20 of 50 mm x 10 mm x 180 μm; four drops (0.2 cm$^3$) of diluted polytetrafluoroethylene; four drops (0.2 cm$^3$) of water; electrolyte solution of 5% NaCl.

The characteristic curve A in Fig. 4 is obtained when petroleum graphite powder A is used. The characteristic curve B is obtained when petroleum graphite powder B is used. The curve B' is obtained when petroleum graphite powder B is subjected to a treatment with a catalyst. The curve A1 is obtained when petroleum graphite powder A is tested within 20% KC1.

As shown in Fig. 4, when the quantity of active carbon is between 30 and 70%, the output power per unit area becomes high. Preferably the quantity of active carbon is between 30 and 50% and, more preferably, between 35 and 45%.

The use of the air cell as an emergency power supply when the performance of the battery mounted on an automotive vehicle drops, as a power supply for a model, or as a power supply for leisure activities such as camping or fishing is very advantageous because the air cell is compact in size, light in weight and capable of generating a high output. Normally, the cathode 20 and the anode 50 are not placed in contact with the electrolyte such as KC1. When and only when the air cell is used, they are placed in contact with the electrolyte. When the air cell is used in the manner just described above, prior to the use of the air cell, the power drop due to the natural discharge or the like does not occur, so that a long shelf life can be ensured so that the air cell may be used as a powder supply in the case of an emergency.

So far it has been described that the electrolyte is KC1, but it is to be understood that sea water, a solution of salt or the like may be equally used.

Instead of the cathode 20 being divided into a plurality of sections as shown in Fig 1B, the cathode may be in the form of a sheet or plate formed with many pores.

Fig. 5 shows the discharge curves of the first embodiment in accordance with the present invention and of conventional cells.

In this case, the load resistance is one ohm, and the voltage when the measurements are started is about 1.2 V. It follows therefore that when the output voltage is 1 V, the output current is 1 A.

It is seen from Fig. 5 that in the case of a manganese cell, the output voltage drops below 1 V within a few minutes after the test is started, and in the case of a Ni-Cd cell, the output voltage drops below 1 V within a little over 20 minutes. On the other hand, in the case of the air cell 1 shown in Fig. 1, even though the total weight thereof is only 12 g, and the output voltage drops below 1 V after only 70 minutes.

Fig. 6 illustrates a second embodiment of the present invention in which an electrolyte is supplied to a plurality of air cells 1. A plurality of air cells 1 are disposed in a vessel 72, and a tank 70 for storing KC1 liquid 71 is disposed upside down. It follows therefore that as long as the KC1 liquid 71 is stored in the tank 70, it is always supplied to the air cells 1, so that the service life of the air cells is increased. In this third embodiment, more than two tanks 70 can be used, and the air cells 1 may be connected in series or in parallel.

As described above, even though the second embodiment is very light in weight, it can generate high output for a long time. Furthermore, the magnesium used in the above-described examples is contained in sea water and is harmless, and the air cell does not contain any toxic substance such as cadmium used in Ni-Cd cells.

Referring back to Fig.5, the voltages of the air cell 1 is gradually decreased and then increased at some time point. This phenomenon occurs because the KCl liquid 61 is further supplied. The KC1 liquid 61 evaporates when the air cell is used, so that when the quantity of loss of the KCl liquid 61 due to its evaporation is replenished, the voltage can be recovered to some extent.

When a plurality of cathodes 20 are fabricated, it is advantageous to carry out the steps shown in FIG. 3 because the fabrication process is simple. Furthermore, the characteristics of the air cell can be stabilized as shown in FIG. 5. The materials used are inexpensive, so that the cost of the air cells can be decreased. Moreover, when the fabrication process as shown in FIG. 3 is used, variations in the quality of the cathodes 20 can be decreased to a minimum.

So far the petroleum graphite powder has been described as being used as a cathode. However, even when a graphite other than petroleum graphite powder is used as a cathode consisting of a plurality of sections, the generated power per unit weight can be increased. Furthermore, even when graphite other than petroleum graphite powder is used as a cathode, the generated power per unit weight can be increased by disposing the current collectors between the cathodes on the one hand and the anodes on the other hand.

The air cell in accordance with the present invention can be used as a power supply cell which must be compact in size and light in weight. For instance, it can be used to drive a model airplane, a power supply in the case of an emergency and so on.

## Claims

1.  An air cell comprising:

    a cathode (20);
    an anode (50); and
    means for collecting electrons generated at said anode (50), said means comprising a current collector (30) electroconductively connected to said cathode (20) and contacting said cathode (20) at a surface thereof facing towards said anode (50);

    characterised in that

    the anode (50) has a comb-like shape so that a plurality of openings are defined therethrough; and
    the cathode (20) has a plurality of spaced-apart sections or at least one through-hole extending therethrough.

2.  An air cell as claimed in claim 1, and further comprising a separator (40), interposed between said cathode (20) and said anode (50), and a reservoir (60) of liquid (61) into which said separator (40) extends, said anode (50) and said cathode (20) being wetted by said liquid (61) via said separator (40).

3.  An air cell as claimed in claim 1 or 2, and further comprising a liquid storage means (70) for continuously supplying an electrolyte to said cathode (20) and said anode (50).

4.  An air cell as set forth in any preceding claim, and further comprising a porous water-repellent body (10) to which said cathode (20) is mounted.

## Patentansprüche

1.  Eine Luft-Depolarisierungsbatterie, umfassend:

    eine Kathode (20);

    eine Anode (50); und
    ein Mittel zum Sammeln von Elektronen, die an der besagten Anode (50) gebildet worden sind, wobei dieses Mittel einen Stromkollektor (30) umfaßt, welcher stromleitend mit der genannten Kathode (20) verbunden ist und die genannte Kathode (20) an der der Anode (50) gegenüberliegenden Oberfläche berührt;

    dadurch gekennzeichnet, daß

    die Anode (50) eine kammartige Form aufweist, so daß eine Mehrzahl von Öffnungen darin definiert sind; und

    daß die Kathode (20) eine Mehrzahl von in Abständen voneinander angeordneten Abschnitten oder wenigstens eine Durchgangsöffnung aufweist.

2.  Eine Luft-Depolarisierungsbatterie, wie in Anspruch 1 beansprucht, welche ferner eine Trennvorrichtung (40), welche zwischen der genannten Kathode (20) und der genannten Anode (50) angeordnet ist, und ein Sammelbecken (60) mit Flüssigkeit (61), in welche sich die genannte Trennvorrichtung (40) erstreckt, wobei die genannte Anode (50) und die genannte Kathode (20) mit dieser Flüssigkeit (61) über die genannte Trennvorrichtung (40) benetzt werden, aufweist.

3.  Eine Luft-Depolarisierungsbatterie, wie in Anspruch 1 oder 2 beansprucht, welche ferner eine Flüssigkeitslagereinrichtung (70) für das kontinuierliche Zuführen eines Elektrolyten zu der genannten Kathode (20) und der genannten Anode (50) aufweist.

4.  Eine Luft-Depolarisierungsbatterie, wie in den vorstehenden Ansprüchen beansprucht, welche ferner einen porösen wasserabweisenden Körper (10) aufweist, an welchem die genannte Kathode (20) befestigt ist.

## Revendications

1.  Cellule à air comprenant :

    une cathode (20) ;
    une anode (50) ; et
    des moyens pour collecter des électrons formés sur ladite anode (50), lesdits moyens comprenant un collecteur de courant (30) relié par électro-conduction à ladite cathode (20) et en contact avec ladite cathode (20) sur la surface de cette cathode orientée en direction de ladite anode (50) ;

caractérisée en ce que l'anode (50) a une forme de peigne de manière qu'une pluralité d'ouvertures la traversent ; et

la cathode (20) comprend une pluralité de parties espacées les unes des autres ou au moins un orifice qui la traverse.

2. Cellule à air selon la revendication 1, comprenant en outre un séparateur (40), intercalé entre ladite cathode (20) et ladite anode (50), et un réservoir (60) de liquide (61) dans lequel plonge ledit séparateur (40), ladite anode (50) et ladite cathode (20) étant imbibées par ledit liquide (61) par l'intermédiaire dudit séparateur (40).

3. Cellule à air selon la revendication 1 ou 2, comprenant en outre un moyen de stockage du liquide (70) pour fournir en permanence un électrolyte à ladite cathode (20) et à ladite anode (50).

4. Cellule à air selon l'une quelconque des revendications précédentes, comprenant en outre un élément poreux repoussant l'eau (10) sur lequel ladite cathode (20) est montée.

FIG. IA

FIG. IB

FIG. 2

FIG. 4

(a) PETROLEUM GRAPHITE POWDER + ACTIVE CARBON (MIXED IN RATIO OF 6:4)

(b)

(c) 0.2 m/m / 60 / 10 / 0.4 m/m / 60

(d) COMPACTING BY ROLLER / 60 / 10

(e) 60 / 10

(f) 20 20 10

F I G. 3

DISCHARGE CURVES
(LOAD RESISTANCE IΩ)

AIR CELL I (I2g)

Ni-Cd CELL
(24g,I.2V,0.5A)

MANGANESE CELL (U NO.3)
(I8g)

OUTPUT VOLTAGE (V)

TIME (min)

F I G. 5

F I G. 6